# FASCICULE DE BREVET EUROPEEN

(11) **EP 0 900 703 B1**
(45) Date de publication et mention de la délivrance du brevet: **13.03.2002**
(21) Numéro de dépôt: 98402196.4
(22) Date de dépôt: 04.09.1998
(51) Int. Cl.: B60R 21/20, B60N 2/42

(54) **Siège de véhicule doté d'un sac de sécurite gonflable latéral**
Fahrzeugsitz mit Seitenairbag
Vehicle seat with side airbag

(30) Priorité: 08.09.1997 FR 9711135
(43) Date de publication de la demande: 10.03.1999
(73) Titulaire: FAURECIA SIEGES D'AUTOMOBILE S.A., 92100 Boulogne-Billancourt (FR)
(72) Inventeur: Guerinot, Thierry, 91150 Etampes (FR); Senechal, Jérôme, 45300 Boynes (FR)
(74) Mandataire: Burbaud, Eric

(56) Documents cités:
- EP-A- 0 769 428

## Description

La présente invention est relative aux sièges de véhicules dotés de sacs de sécurité gonflables latéraux.

Plus particulièrement, l'invention concerne un siège de véhicule comportant un dossier qui inclut une matelassure supportée par une armature rigide et recouverte par une coiffe d'habillage, le dossier présentant une face avant qui est destinée à servir d'appui pour le dos d'un utilisateur et deux bords latéraux qui encadrent cette face avant, ledit dossier comportant en outre au moins un dispositif de sécurité à sac gonflable qui est adapté pour gonfler son sac en le dépliant latéralement par rapport à l'utilisateur lorsque le véhicule subit un choc prédéterminé, le dispositif de sécurité étant disposé dans un boîtier doté d'une paroi latérale périphérique et d'une face frontale adaptée pour s'ouvrir lorsque le sac du dispositif de sécurité se gonfle, ce boîtier étant intégré dans la matelassure au niveau d'un des bords latéraux du dossier. Les caractéristiques figurant dans le préambule de la revendication 1 sont connues du document EP-A 769428.

Dans les sièges connus de ce type, la coiffe du dossier recouvre entièrement la face frontale du boîtier du dispositif de sécurité, cette coiffe étant pourvue d'une couture déchirable en correspondance avec ladite face frontale.

Ces sièges connus présentent les inconvénients suivants :
- il peut être difficile de positionner parfaitement la couture déchirable de la coiffe par rapport à la face frontale du boîtier, puisque la coiffe recouvre entièrement ce boîtier : si ce positionnement est mal fait, le dispositif de sécurité risque de mal fonctionner ou même de ne pas fonctionner du tout en cas d'accident subi par le véhicule,
- il est nécessaire de valider le bon fonctionnement du dispositif de sécurité pour chaque modèle de coiffe susceptible de recouvrir le dossier, puisque le fonctionnement dudit dispositif de sécurité fait intervenir le déchirement de ladite coiffe : compte tenu du grand nombre de modèles de coiffe possibles pour chaque modèle de véhicule, ceci entraîne des tests très nombreux et coûteux.

La présente invention a notamment pour but de pallier ces inconvénients.

A cet effet, selon l'invention, un siège du genre en question est essentiellement caractérisé en ce que la coiffe d'habillage comporte une découpe délimitée par un bord qui appartient à ladite coiffe et qui longe la face frontale du boîtier du dispositif de sécurité, de sorte que cette face frontale est apparente sur le bord latéral du dossier, et en ce que la face frontale du boîtier du dispositif de sécurité est entourée par une gorge qui est ouverte latéralement vers l'extérieur du dossier et qui est intégrée dans la matelassure, le bord de la coiffe qui longe la face frontale du boîtier étant engagé dans ladite gorge, et ce bord étant pourvu de moyens de rétention qui coopèrent avec des moyens de rétention complémentaires prévus dans la gorge pour maintenir ledit bord dans ladite gorge.

Grâce à ces dispositions, on s'affranchit des problèmes de positionnement de la coiffe du dossier, et le bon fonctionnement du dispositif de sécurité est indépendant de ladite coiffe, de sorte qu'il n'est plus nécessaire de valider ce bon fonctionnement pour chaque type de coiffe utilisé.

Dans des modes de réalisation préférés de l'invention, on peut éventuellement avoir recours en outre à l'une et/ou à l'autre des dispositions suivantes :
- la gorge qui entoure la face frontale du boîtier est solidaire dudit boîtier ;
- la gorge qui entoure la face frontale du boîtier est formée d'une seule pièce avec ledit boîtier ;
- la gorge qui entoure la face frontale du boîtier présente une section sensiblement en U, avec une paroi latérale extérieure, une paroi latérale intérieure et un fond qui relie lesdites parois latérales extérieure et intérieure, la paroi latérale intérieure appartenant au boîtier ;
- la gorge qui entoure la face frontale du boîtier présente une section sensiblement en U, avec une paroi latérale extérieure, une paroi latérale intérieure et un fond qui relie lesdites parois latérales extérieure et intérieure, la paroi latérale extérieure comportant des rebords saillants vers l'intérieur qui constituent lesdits moyens de rétention complémentaires, les moyens de rétention solidaires du bord de la coiffe étant constitués par un profilé souple à section sensiblement en J qui est ouvert vers l'extérieur du dossier et qui présente, d'une part, une branche intérieure fixée au bord de la coiffe et, d'autre part, une branche extérieure qui s'accroche derrière les rebords saillants de la paroi latérale extérieure de la gorge.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un siège selon une forme de réalisation de l'invention,
- et la figure 2 est une vue en coupe horizontale partielle du dossier du siège représenté sur la figure 1, la coupe étant prise selon la ligne II-II de la figure 1.

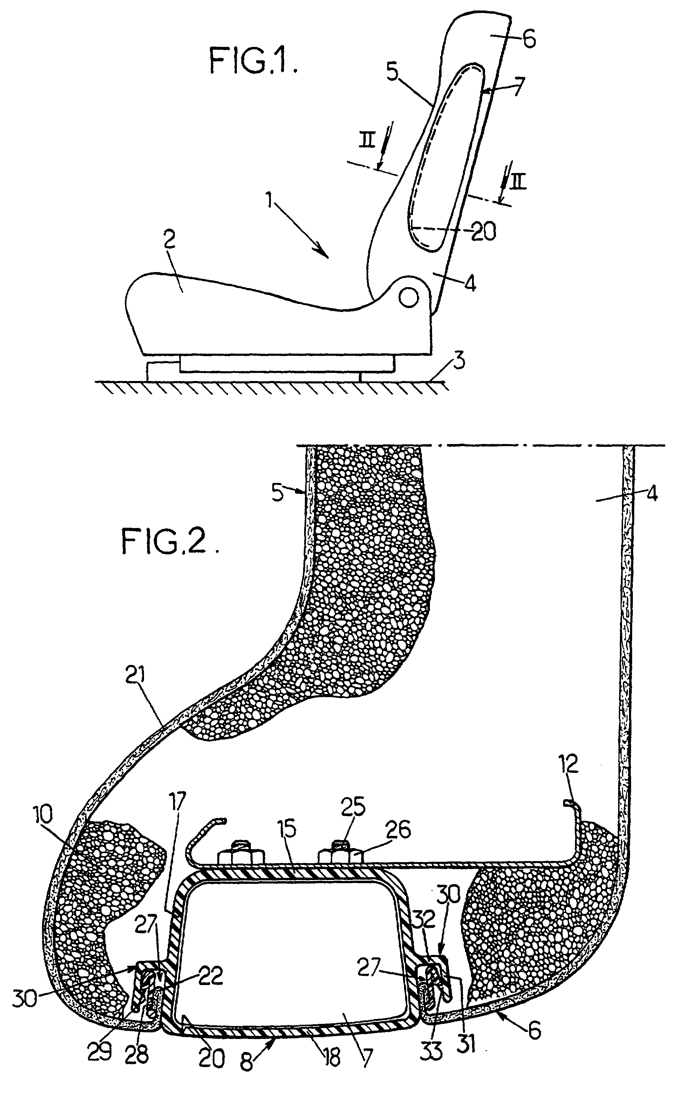

La figure 1 montre un siège 1 de véhicule automobile qui comporte une assise 2 montée sur le plancher 3 du véhicule, et un dossier 4 monté sur l'assise.

Ce dossier 4 présente une face avant 5 qui est destinée à servir d'appui pour le dos d'un utilisateur, et deux bords latéraux 6 qui encadrent ladite face avant (un seul de ces bords latéraux est visible sur la figure 1).

Au moins l'un des deux bords latéraux 6, généralement celui de ces deux bords qui est disposé vers l'extérieur du véhicule, est pourvu d'un dispositif de sécurité 7 à sac gonflable ("airbag") qui est adapté pour gonfler son sac (généralement au moyen d'un dispositif pyrotechnique) en le dépliant latéralement par rapport à l'utilisateur lorsque le véhicule subit un choc prédéterminé.

Comme représenté sur la figure 2, le dispositif de sécurité 7 est disposé dans un boîtier 8 fermé, réalisé par exemple en matière plastique, qui est intégré dans la matelassure 10 en mousse synthétique du dossier 4.

Ce boîtier 8 comporte :
- un fond 15 qui est fixé sur l'armature métallique 12 du dossier, par exemple au moyen de vis et d'écrous 25,26,
- une paroi latérale périphérique 17,
- et une paroi frontale 18 qui est apparente à l'extérieur du bord latéral 6 du dossier.

La paroi frontale 18 du boîtier 8 est adaptée pour s'ouvrir lorsque le sac du dispositif de sécurité se gonfle.

A cet effet, cette paroi frontale 18 peut comporter une ou plusieurs rainures 20 qui se rompent lors du gonflage dudit sac, cette rainure pouvant par exemple présenter une forme générale de U, avec une base sensiblement verticale et deux branches latérales s'étendant vers l'arrière à partir de ladite base (voir figure 1).

Par ailleurs, la coiffe 21 en tissu, cuir ou autre, qui recouvre la matelassure 10 du dossier, comporte un bord 22 qui délimite une découpe disposée en correspondance avec le boîtier 8.

Le long de ce bord périphérique 22 est fixé un profilé souple en matière plastique 27, à section sensiblement en J ouvert vers l'extérieur du dossier, ce profilé présentant, d'une part, une branche intérieure 28 qui est cousue le long du bord 22 de la coiffe, et d'autre part, une branche extérieure élastique 29.

Ce profilé 27 est inséré avec le bord 22 de la coiffe dans une gorge périphérique 30 qui est formée d'une seule pièce avec le boîtier 8 et qui présente une section sensiblement en forme de U ouverte latéralement vers l'extérieur du dossier.

Cette gorge 30 présente une paroi latérale extérieure 31, une paroi latérale intérieure constituée par une portion de la paroi latérale 17 du boîtier, et un fond 32 qui relie la paroi latérale extérieure 31 à la paroi latérale 17.

De plus, la paroi latérale extérieure 31 est pourvue d'un rebord d'accrochage 33 continu ou non, qui fait saillie vers l'intérieur de la gorge 30, et derrière lequel vient s'accrocher l'extrémité libre de la branche extérieure 29 du profilé 27.

De préférence, ce rebord d'accrochage 33 présente une face avant inclinée selon un angle aigu par rapport à la paroi latérale extérieure 31 de la gorge, et une face arrière disposée sensiblement à angle droit par rapport à la paroi latérale 31 en regard du fond 32 de la gorge.

## Revendications

1. Siège de véhicule comportant un dossier (4) qui inclut une matelassure (10) supportée par une armature rigide (12) et recouverte par une coiffe d'habillage (21), le dossier présentant une face avant (5) qui est destinée à servir d'appui pour le dos d'un utilisateur et deux bords latéraux (6) qui encadrent cette face avant, ledit dossier comportant en outre au moins un dispositif de sécurité (7) à sac gonflable qui est adapté pour gonfler son sac en le dépliant latéralement par rapport à l'utilisateur lorsque le véhicule subit un choc prédéterminé, le dispositif de sécurité (7) étant disposé dans un boîtier (8) doté d'une paroi latérale périphérique (17) et d'une face frontale (18) adaptée pour s'ouvrir lorsque le sac du dispositif de sécurité se gonfle, ce boîtier étant intégré dans la matelassure (10) au niveau d'un des bords latéraux du dossier (6),
**caractérisé en ce que** la coiffe d'habillage comporte une découpe délimitée par un bord (22) qui appartient à ladite coiffe et qui longe la face frontale (18) du boîtier du dispositif de sécurité, de sorte que cette face frontale est apparente sur le bord latéral (6) du dossier,
et **en ce que** la face frontale (18) du boîtier du dispositif de sécurité est entourée par une gorge (30) qui est ouverte latéralement vers l'extérieur du dossier et qui est intégrée dans la matelassure (10), le bord (22) de la coiffe qui longe la face frontale du boîtier étant engagé dans ladite gorge, et ce bord étant pourvu de moyens de rétention (27) qui coopèrent avec des moyens de rétention complémentaires (33) prévus dans la gorge (30) pour maintenir ledit bord dans ladite gorge.

2. Siège selon la revendication 1, dans lequel la gorge (30) qui entoure la face frontale (18) du boîtier est solidaire dudit boîtier.

3. Siège selon la revendication 2, dans lequel la gorge (30) qui entoure la face frontale (18) du boîtier est formée d'une seule pièce avec ledit boîtier.

4. Siège selon la revendication 3, dans lequel la gorge (30) qui entoure la face frontale (18) du boîtier présente une section sensiblement en U, avec une paroi latérale extérieure (31), une paroi latérale intérieure (17) et un fond (32) qui relie lesdites parois latérales extérieure et intérieure, la paroi latérale intérieure (17) appartenant au boîtier (8).

5. Siège selon l'une quelconque des revendications précédentes, dans lequel la gorge (30) qui entoure la face frontale (18) du boîtier présente une section sensiblement en U, avec une paroi latérale extérieure (31), une paroi latérale intérieure (17) et un fond (32) qui relie lesdites parois latérales extérieure et intérieure, la paroi latérale extérieure (31) comportant des rebords (33) saillants vers l'intérieur qui constituent lesdits moyens de rétention complémentaires, les moyens de rétention solidaires du bord de la coiffe étant constitués par un profilé souple (27) à section sensiblement en J qui est ouvert vers l'extérieur du dossier et qui présente, d'une part, une branche intérieure (28) fixée au bord (22) de la coiffe et, d'autre part, une branche extérieure (29) qui s'accroche derrière les rebords saillants (33) de la paroi latérale extérieure de la gorge.

## Patentansprüche

1. Fahrzeugsitz mit einer Rückenlehne (4), die eine Polsterung (10) enthält, welche von einem starren Beschlag (12) gestützt wird und mit einem Bezug (21) bedeckt ist, wobei die Rückenlehne eine Vorderseite (5), die als Stütze für den Rücken eines Benutzers dient, und zwei Seitenteile (6) aufweist, die die Vorderseite einrahmen, wobei die Rückenlehne darüber hinaus mindestens eine Sicherheitsvorrichtung (7) mit Airbag aufweist, der aufgeblasen und seitlich vom Benutzer entfaltet wird, wenn das Fahrzeug einen bestimmten Aufprall erfährt, wobei die Sicherheitsvorrichtung (7) in einem Gehäuse (8) mit Seitenwänden (17) und einer Frontseite (18) untergebracht ist, die sich öffnen kann, wenn sich der Airbag der Sicherheitsvorrichtung aufbläst, wobei das Gehäuse in der Polsterung (10) an einem der Seitenteile (6) der Rückenlehne integriert ist,
**dadurch gekennzeichnet, dass** der Bezug einen Ausschnitt aufweist, der von einer Kante (22) begrenzt wird, die zum Bezug gehört und an der Frontseite (18) des Gehäuses der Sicherheitsvorrichtung entlangläuft, sodass diese Frontseite am Seitenteil (6) der Rückenlehne sichtbar ist,
und **dadurch, dass** die Frontseite (18) des Gehäuses der Sicherheitsvorrichtung von einer Nut (30) umgeben ist, die zur Außenseite der Rückenlehne hin offen und in die Polsterung (10) integriert ist, wobei die Kante (22) des Bezugs, die an der Frontseite des Gehäuses entlangläuft, in diese Nut eingefügt und diese Kante mit Haltemitteln (27) versehen ist, die mit komplementären, in der Nut (30) vorgesehenen Haltemitteln (33) zusammenwirken, um die Kante in der Nut zu halten.

2. Sitz nach Anspruch 1, bei dem die Nut (30), die die Frontseite (18) des Gehäuses umgibt, mit dem Gehäuse fest verbunden ist.

3. Sitz nach Anspruch 2, bei dem die Nut (30), die die Frontseite (18) des Gehäuses umgibt, aus einem Stück mit dem Gehäuse geformt ist.

4. Sitz nach Anspruch 3, bei dem die Nut (30), die die Frontseite (18) des Gehäuses umgibt, einen im Wesentlichen U-förmigen Querschnitt mit einer äußeren Seitenwand (31), einer inneren Seitenwand (17) und einem Boden (32) aufweist, der die äußere und die innere Seitenwand miteinander verbindet, wobei die innere Seitenwand (17) zum Gehäuse (8) gehört.

5. Sitz nach einem der vorhergehenden Ansprüche, bei dem die Nut (30), die die Frontseite (18) des Gehäuses umgibt, einen im Wesentlichen U-förmigen Querschnitt mit einer äußeren Seitenwand (31), einer inneren Seitenwand (17) und einem Boden (32) aufweist, der die äußere und die innere Seitenwand miteinander verbindet, wobei die äußere Seitenwand (31) nach innen vorspringende Krempen (33) umfasst, die die komplementären Haltemittel darstellen, wobei die mit der Kante des Bezugs fest verbundenen Haltemittel ein nachgiebiges Profil (27) mit im Wesentlichen J-förmigem Querschnitt aufweisen, das zur Außenseite der Rückenlehne hin offen ist und zum einen einen inneren, an der Kante (22) des Bezugs befestigten Arm (28) aufweist und zum anderen einen äußeren Arm (29), der sich hinter den vorspringenden Krempen (33) der äußeren Seitenwand der Nut festhakt.

## Claims

1. A vehicle seat comprising a seat back (4) which includes padding (10) supported by a rigid frame (12) and covered by an upholstery sleeve (21), the seat back having a front face (5) which is intended to act as a support for a user's back and two side edges (6) which flank this front face, said seat back comprising additionally at least one airbag safety device (7) which is adapted to inflate its bag by unfolding it at the side in relation to the user when the vehicle sustains a predetermined impact, the safety device (7) being placed in a casing (8) fitted with a peripheral side wall (17) and a front face (18) adapted to open when the safety device bag inflates, this casing being integrated into the padding (10) on one of the side edges of the seat back (6),
**characterized in that** the upholstery sleeve comprises a cut out section delimited by an edge (22) which belongs to said sleeve and which borders the front face (18) of the casing of the safety device, with the result that this front face is visible on the side edge (6) of the seat back,
and **in that** the front face (18) of the casing of the safety device is surrounded by a groove (30) which is open at the side outwards from the seat back and which is integrated into the padding (10), the edge (22) of the sleeve which borders the casing front face being engaged in said groove and this edge being provided with means of retention (27) which combine with additional means of retention (33) provided in the groove (30) to keep said edge in said groove.

2. A seat according to claim 1, in which the groove (30) which surrounds the front face (18) of the casing is integral with said casing.

3. A seat according to claim 2, in which the groove (30) which surrounds the front face (18) of the casing is formed in a single piece with said casing.

4. A seat according to claim 3, in which the groove (30) which surrounds the front face (18) of the casing has approximately a U shaped section with an external side wall (31), an internal side wall (17) and a bottom (32) which connects said external and internal side walls, the internal side wall (17) belonging to the casing (8).

5. A seat according to any one of the previous claims in which the groove (30) which surrounds the front face (18) of the casing has approximately a U shaped section with an external side wall (31), an internal side wall (17) and a bottom (32) which connects said external and internal side walls, the external side wall (31) comprising inward projecting flanges (33) which constitute said additional means of retention, the means of retention secured to the edge of the sleeve being constituted by an approximately J shaped flexible section (27) which is open outwards from the seat back and which has, on the one hand, an internal branch (28) fixed to the edge (22) of the sleeve and, on the other hand, an external branch (29) which hooks itself behind the projecting flanges (33) of the external side wall of the groove.
